# EUROPÄISCHE PATENTANMELDUNG

(11) **EP 3 214 026 A1**
(43) Veröffentlichungstag der Anmeldung: **06.09.2017**
(21) Anmeldenummer: 17154227.7
(22) Anmeldetag: 01.02.2017
(51) Int. Cl.: B65G 65/00, B66F 9/12

(54) **EINRICHTUNG ZUM UMSETZEN VON LADUNGSTRÄGERN**

(30) Priorität: 04.03.2016 DE 102016103964
(71) Anmelder: M.W.B. GmbH, 84174 Eching (DE)
(72) Erfinder: Huber, Matthias, 94166 Stubenberg (DE)
(74) Vertreter: Gustorf, Gerhard

(57) **Zusammenfassung**

Die Einrichtung mit wenigstens einer ausfahrbare Gabelzinken (42) aufweisenden Greifeinheit (38) dient zum Umsetzen von Ladungsträgern (10) von Fahrzeugen (28) auf eine zu diesen parallele Förderbahn (34) und umgekehrt. Gemäß der Erfindung ist vorgesehen, dass die Greifeinheit (38) wenigstens ein heb- und senkbares Paar doppelttief ausfahrbarer Teleskopzinken (44) hat. Die Greifeinheiten (38) können nebeneinander an einer Längsseite des Fahrzeugs (28) oder an einer Längsseite der Förderbahn (34) angeordnet sein.

## Beschreibung

Die Erfindung betrifft eine Einrichtung mit wenigstens einer ausfahrbare Gabelzinken aufweisenden Greifeinheit zum Umsetzen von Ladungsträgern von Fahrzeugen auf eine zu diesen parallele Förderbahn und umgekehrt.

In Fabrikationsbetrieben, beispielsweise der Automobilherstellung, werden zur Lösung logistischer Aufgaben Fahrzeuge in Form von Routenzügen mit Anhängern eingesetzt, um Arbeitsstationen mit den erforderlichen Einzelteilen zu versorgen. Als Ladungsträger auf den Anhängern dienen überwiegend Paletten, die in einer Umschlagstation von Greifeinheiten auf eine Förderbahn, beispielsweise eine Rollenbahn überführt werden, die die jeweilige Arbeitsstation versorgt. Umgekehrt können auch die Ladungsträger auf der Förderbahn in die Umschlagstation geführt werden, wo sie mit Hilfe der Greifeinheiten auf die Anhänger eines Routenzugs geladen werden.

Zum Umsetzen der Ladungsträger, meistenteils in Form von Paletten, werden in herkömmlichen System die Greifeinheiten zwischen der Förderbahn und den Fahrzeugen, beispielsweise den Anhängern eines Routenzugs angeordnet, so dass die Greifeinheiten nach beiden Seiten ausfahrbare Gabelzinken haben müssen, die bei den überwiegend verwendeten Paletten auf deren Breitseite zwischen die nach unten offenen Zwischenräume einfahren, um anschließend über eine Mittelposition der Greifeinheit zur anderen Seite zu verfahren, auf der die Paletten auf die Förderbahn abgegeben werden. Voraussetzung hierfür ist es, dass in der Mittelposition keine Konstruktionsteile der Palette das Überfahren von der einen zur anderen Seite behindern.

Da die bekannten Paletten auf ihrer Längsseite durchgehende Bodenlatten haben, muss bei der Beladung der Paletten auf den Fahrzeugen darauf geachtet werden, dass die Bodenlatten quer zur Fahrtrichtung verlaufen, so dass die Gabelzinken immer von der nach unten freien Breitseite der Paletten diese untergreifen können.

Aus DE 10 2013 004 489 A1 ist es grundsätzlich bekannt, ein Lastaufnahmemittel für ein Regalbediengerät mit einer Hubvorrichtung zum Transport verschiedener Paletten so auszubilden, dass dieses zwei teleskopisch verstellbare Zinken hat, die zur doppelttiefen Lagerung von Europaletten dienen, um die Paletten in einem Hochregallager in zwei hintereinander liegenden Positionen abzulegen bzw. aus diesen Positionen zu entnehmen. Die ausfahrbaren Gabelzinken können im dargestellten Ausführungsbeispiel sowohl von der Palettenbreitseite in die nach unten offenen Zwischenräume eingreifen oder die Palette von der Längsseite her erfassen, wobei die Zinken allerdings nicht in die Zwischenräume eingreifen, sondern unter die Bodenlatten der Paletten greifen.

Der Erfindung liegt die Aufgabe zugrunde, eine Einrichtung der eingangs umrissenen Bauart zur Verfügung zu stellen, die ein Umsetzen der Ladungsträger sowohl von deren Breitseite als auch von deren Schmalseite her ermöglicht, ohne dass beim Umsetzen vom Fahrzeug auf die Förderbahn und umgekehrt eine störende Mittelposition überfahren werden muss.

Zur Lösung dieser Aufgabe ist bei der Erfindung vorgesehen, dass die Greifeinheit wenigstens ein heb- und senkbares Paar doppelttief ausfahrbarer Teleskopzinken hat. Damit wird es möglich, die Greifeinheiten in einer Reihe nebeneinander entweder an einer Längsseite des Fahrzeugs oder an einer Längsseite der Förderbahn anzuordnen, so dass zwischen beiden der Raum zum störungsfreien Umsetzen frei bleibt.

In Weiterbildung der Erfindung ist für jede Teleskopstufe der doppelttief ausfahrbaren Zinken ein eigener, separat ansteuerbarer Ausfahrantrieb vorgesehen.

Die Erfindung ist nachstehend an einem Ausführungsbeispiel erläutert, das in der Zeichnung dargestellt ist. Es zeigen:
- Figur 1: die perspektivische Ansicht eines Ladungsträgers in Form einer herkömmlichen Palette,
- Figur 2: die perspektivische Ansicht der verwendeten Greifeinheit mit doppelttief ausfahrbaren Teleskopzinken in eingefahrenen Zustand,
- Figur 3: die Greifeinheit der Figur 2 mit den im Kurzhub ausgefahrenen Zinken,
- Figur 4: in verkleinertem Maßstab die doppeltief ausgefahrenen Teleskopzinken,
- Figur 5: die schematische Darstellung einer herkömmlichen Umschlagstation zum Überführen einer Palette durch eine Greifeinheit auf eine gegenüberliegende Förderbahn,
- Figur 6: die Umschlagstation in einer Zwischenstellung der Greifeinheit,
- Figur 7: die Umschlagstation des Standes der Technik beim Überführen der Palette auf die Förderbahn,
- Figur 8: die schematische Darstellung einer erfindungsgemäß ausgebildeten Einrichtung, bei der die Greifeinheit nicht zwischen den Anhängern eines Routenzugs und der Förderbahn angeordnet ist, sondern auf der den Anhängern gegenüberliegenden Seite der Förderbahn,
- Figur 9: die Ansicht der Umschlagstation bei der Abgabe einer Palette auf die Förderbahn,
- Figuren 10-25: die perspektivische Ansicht einer Umschlagstation in den verschiedenen Umschlagphasen gemäß der Erfindung.

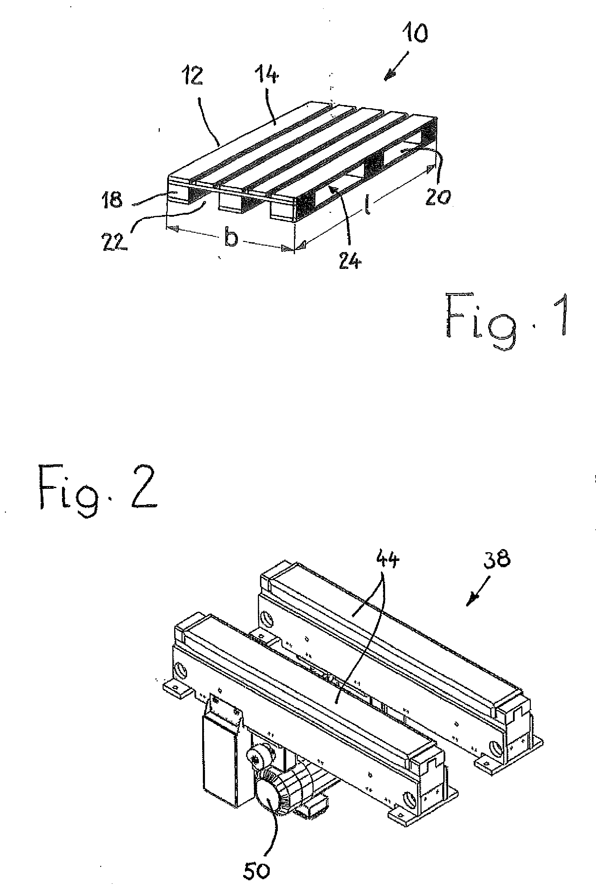

Figur 1 zeigt einen herkömmlichen Ladungsträger 10 in Form einer üblichen Palette 12 mit einer Breitseite der Länge b und einer Längsseite der Länge 1. Übliche Maße sind beispielsweise b= 800 mm und l = 1200 mm.

Die Decklatten 14 der Palette 12 sind über Zwischenlatten 16 auf Fußklötzen 18 befestigt, die ihrerseits an der Unterseite über in Längsrichtung l verlaufende Bodenlatten 20 miteinander verbunden sind. Auf diese Weise hat die Palette 12 zwischen den Fußklötzen 18 zwei nach unten offene Freiräume 22, in die in Längsrichtung l beispielsweise die Gabelzinken eines Gabelstaplers ohne Höhenbeschränkung der Zinken einfahren können, während auf der Längsseite l die Freiräume 24 in der Höhe durch die Bodenlatten 20 nach unten beschränkt sind.

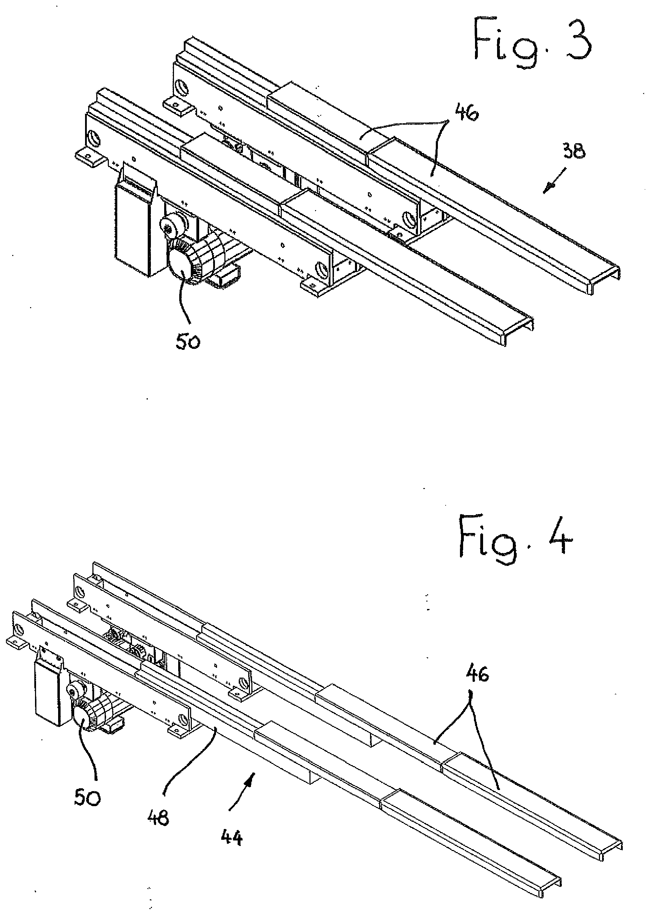

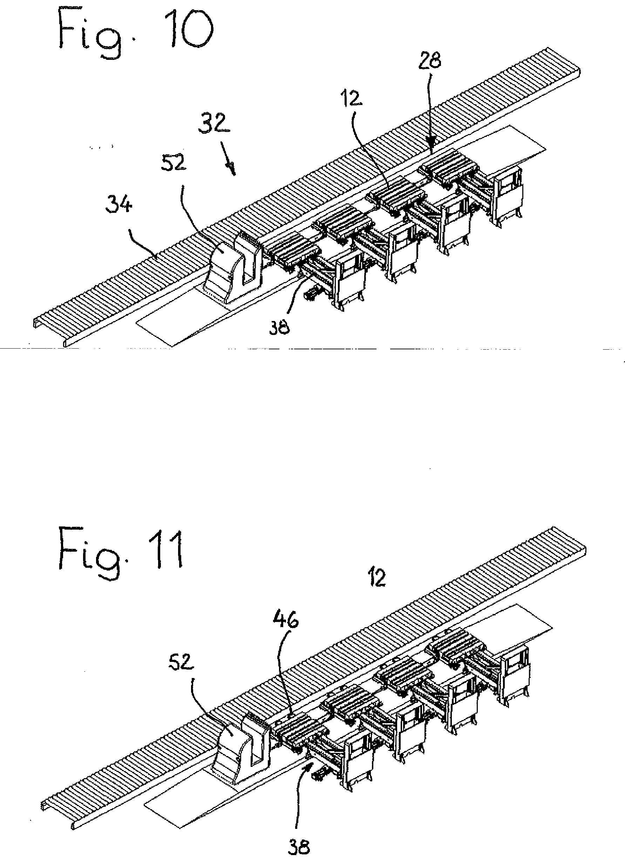

Die Figuren 3 bis 5 zeigen schematisch das bisher übliche System einer Einrichtung 26 zum Umsetzen von Paletten 12, die auf einem Anhänger 28 eines Routenzugs (vgl. Figuren 10 bis 25) in einen "Umschlagbahnhof" 32 eingeführt werden. Dieser hat eine parallel zu dem Anhänger 28 und damit zum Routenzugs 30 angeordnete Förderbahn 34 mit Förderrollen 36, wobei zwischen den Anhängern 28 des Routenzugs 30 und der Förderbahn 34 eine Greifeinheit 38 angeordnet ist. Diese hat eine Hubeinrichtung 40, auf der teleskopierbare Gabelzinken 42 nach beiden Seiten einfachtief ausgefahren werden können, was durch die Pfeile in den Figuren 3 bis 5 angedeutet ist.

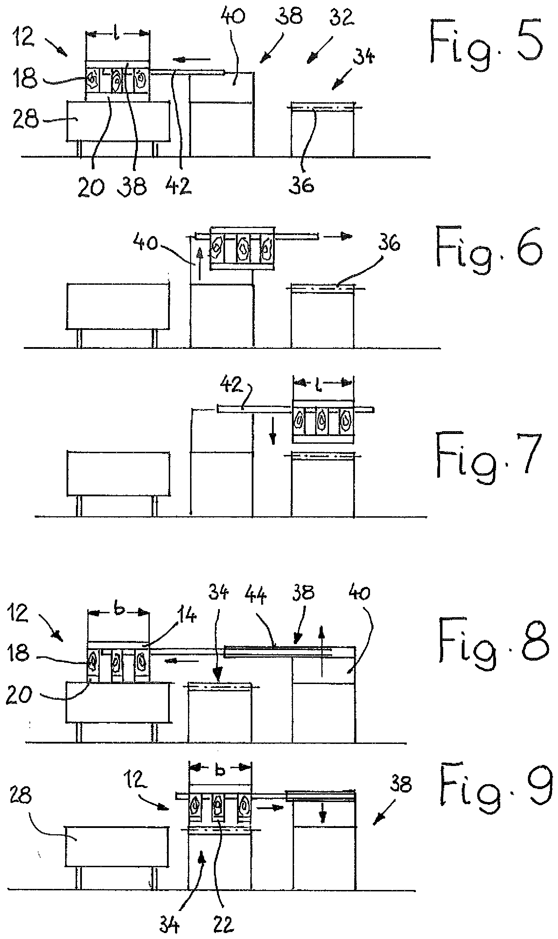

Da beim Umsetzen der Palette 12 mittels der Gabelzinken 42 die Mittelposition der Greifeinheit 38 mit Hubeinrichtung 40 überfahren wird, muss die Palette 12 so auf dem Anhänger 28 liegen, dass die Bodenlatte 20 quer zur Fahrtrichtung verläuft, damit die Gabelzinken 42 von der Schmalseite in die Freiräume 22 (vgl. Figur 1) einfahren können. Nach dem Einfahren der Gabelzinken 42 wird die Hubeinrichtung 40 betätigt, so dass die Palette 12 angehoben wird, um mit den Gabelzinken 42 in den Figuren 4 und 5 nach rechts über die Förderbahn 34 verfahren zu werden, wo sie dann auf die Förderrollen 36 abgesenkt wird.

Die Figuren 6 und 7 zeigen schematisch das Prinzip der Einrichtung gemäß der Erfindung, bei der statt einer nach beiden Seiten teleskopierbaren Greifeinheit 38 mit einfachtiefen Gabelzinken 42 eine heb- und senkbare Greifeinheit 38 mit einem Paar doppelttief ausfahrbarer Teleskopzinken 44 vorgesehen ist. Die Greifeinheit 38 befindet sich gemäß der Erfindung nicht zwischen den Anhängern 28 des Routenzugs 30 und der Förderbahn 34, sondern auf der von dem Anhänger 28 abgewandten Seite der Förderbahn 34. Alternativ ist es auch möglich, die Greifeinheit 38 auf der in den Figuren 6 und 7 linken Seite der Anhänger 28 anzuordnen.

Da in dieser Konstellation beim Umsetzen der Paletten 12 keine störende Mittelposition überfahren werden muss, sondern die Paletten 12 unmittelbar auf die daneben liegende Förderbahn 34 überführt werden, können die Paletten 12 auf dem Anhänger 28 sinnvollerweise gegenüber der Position der Figuren 3 bis 5 in um 90° gedrehter Stellung angeordnet sein, so dass die Teleskopzinken 44 in die Freiräume 24 über den Bodenlatten 20 einfahren können. Die Breitseite b liegt in dieser bevorzugten Stellung auf dem Anhänger 28 quer zur Fahrtrichtung.

Die Figuren 2 bis 4 zeigen eine Möglichkeit für die Ausbildung einer ortsfesten Greifeinheit 38, die auf einer Seite der Förderbahn 34 oder der Anhänger 28 eines Routenzugs 30 angeordnet werden kann. Diese Greifeinheit 38 hat in an sich bekannter Weise zwei doppelttief ausfahrbare Teleskopzinken 44 mit zwei zueinander parallelen unteren Zinken 48, auf denen längsverschieblich zwei obere Zinkenpaare 46 gelagert sind. Die auf diese Weise doppelttief ausfahrbaren Teleskopzinken 44 haben für die Teleskopstufen jeweils eigene, separat ansteuerbare Ausfahrantriebe, von denen der Ausfahrantrieb 50 für den in Figur 3 gezeigten Kurzhub der Teleskopzinken 46 nur für die obere Teleskoplage 52 dient, während auf der anderen Seite ein nicht sichtbarer Antrieb 50' für die untere Teleskopstufe 48 vorgesehen ist. Auf der Greifeinheit 38 sind ferner zwei nicht dargestellte Huborgane 54 zum Anheben bzw. Absenken der Teleskopzinken 44 angeordnet.

Die Figuren 10 bis 25 zeigen schematisch die verschiedenen Positionen in einem "Umschlagbahnhof 32" mit einem Routenzug 30 mit Zugfahrzeug 52 und Anhängern 28 und mit einer Förderbahn 34, wobei die nachstehenden Phasen zu erkennen sind:
- Figur 10:: Einfahrt eines Routenzugs 30 mit beladenen Anhängern 28 in den Umschlagbahnhof 32 zwischen Förderbahn 34 und gegenüberliegenden Greifeinheiten 38
- Figur 11:: Ausfahren der oberen Teleskopstufen 46 in die Freiräume 24 über den Bodenlatten 20 der Paletten 12

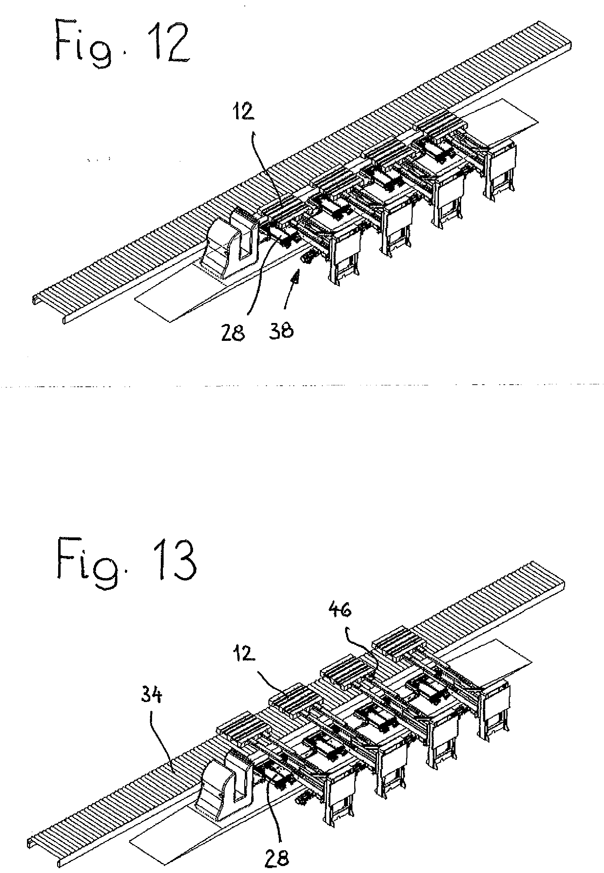

- Figur 12:: Anheben der Greifeinheiten 38 und damit Abheben der Paletten 12 von den Anhängern 28
- Figur 13:: Ausfahren der Teleskopzinken 44 über die Förderbahn 34

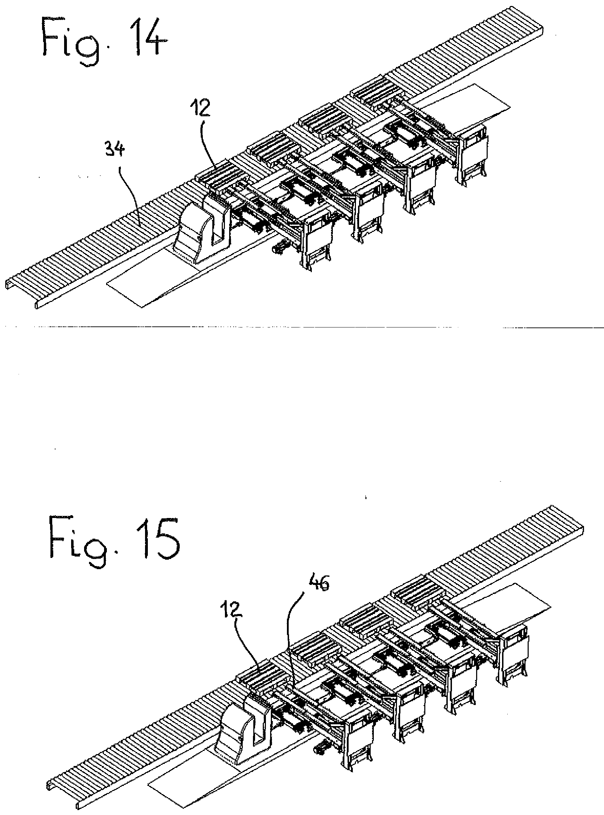

- Figur 14:: Absenken der Paletten 12 auf die Förderbahn 34
- Figur 15:: Zurückfahren der Teleskopzinken 44 und damit Ausfahren der oberen Teleskopstufe 46 aus den Paletten 12

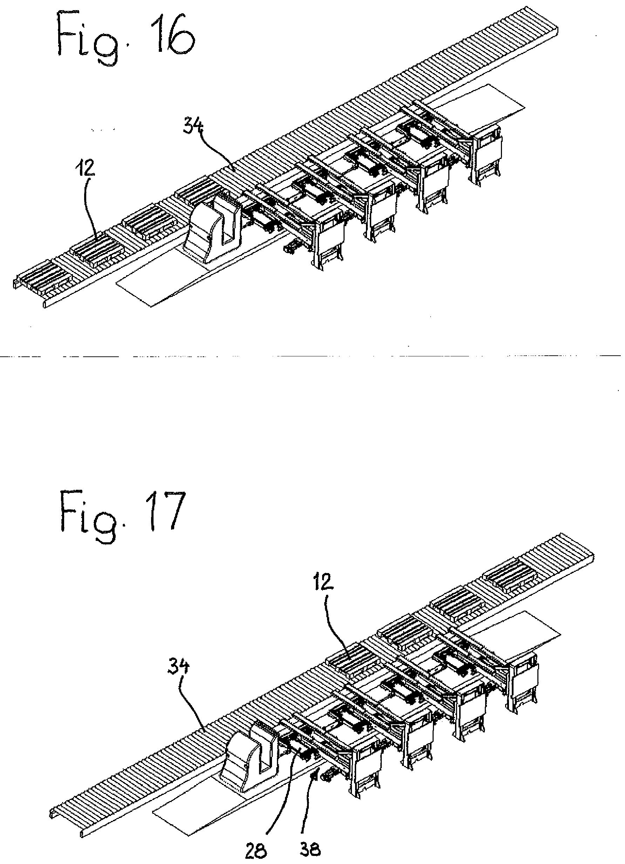

- Figur 16:: Abtransport der Paletten 12 auf der Förderbahn 34
- Figur 17:: Anliefern weiterer Paletten 12 auf der Förderbahn 34

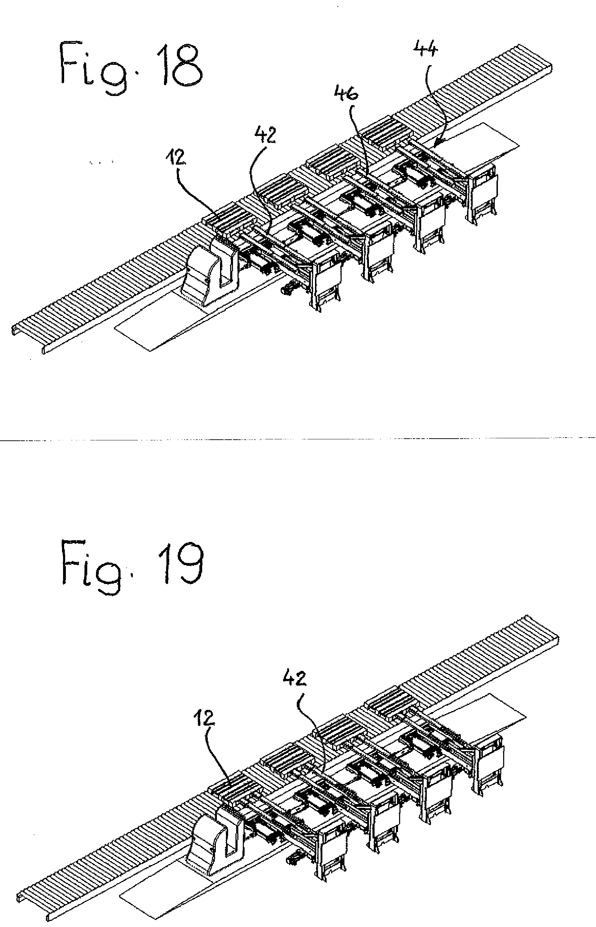

- Figur 18:: Position der neuen Paletten 12 vor den Greifeinheiten 38
- Figur 19:: Ausfahren der Teleskopzinken 44 mit der oberen Teleskopstufe 46 in die Paletten 12

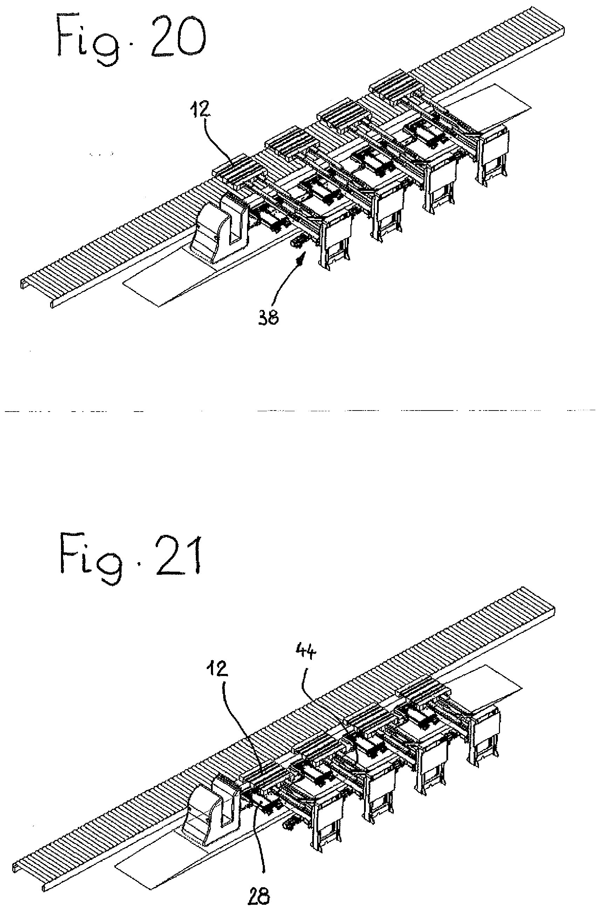

- Figur 20:: Anheben der Greifeinheiten 38 und damit der Paletten 12
- Figur 21:: Zurückfahren der Teleskopzinken 44 mit den Paletten 12

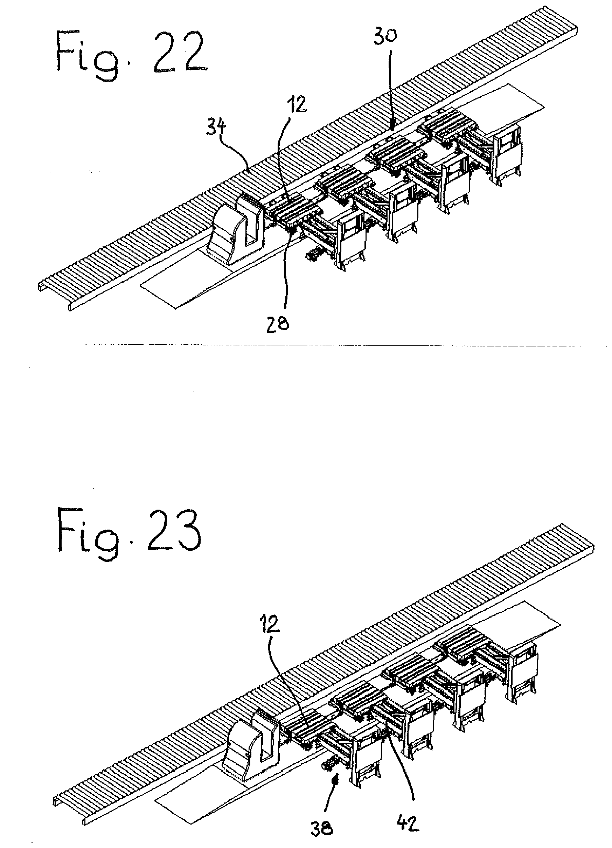

- Figur 22:: Absenken der Paletten 12 auf die Anhänger 28 des Routenzugs 30
- Figur 23:: Zurückfahren der Gabelzinken 42

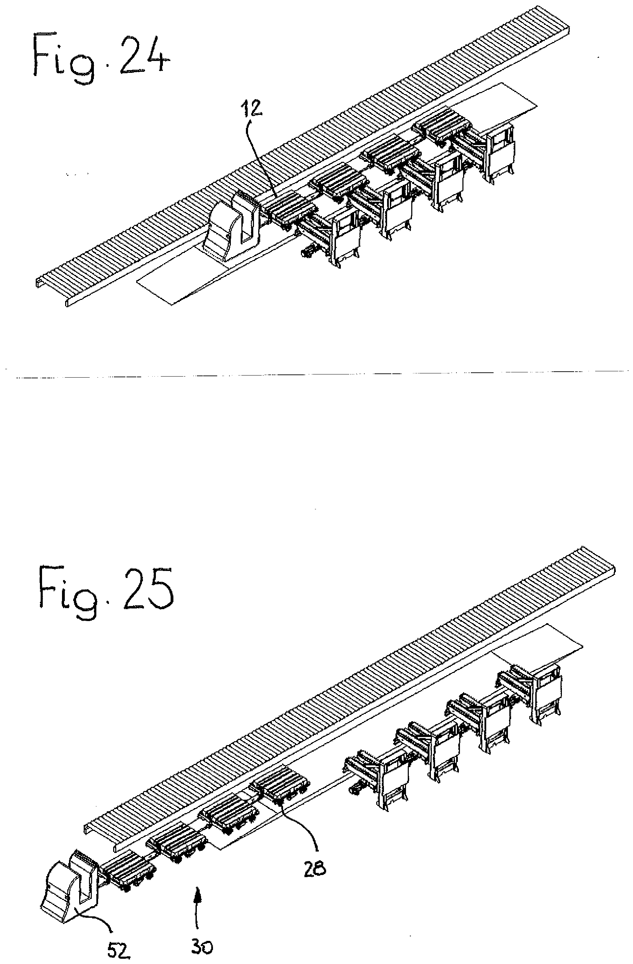

- Figur 24:: Freigabe der Paletten 12
- Figur 25:: Abfahrt des mit den neuen Paletten 12 beladenen Routenzugs 30.

## Patentansprüche

1. Einrichtung mit wenigstens einer ausfahrbare Gabelzinken (42) aufweisenden Greifeinheit (38) zum Umsetzen von Ladungsträgern (10) von Fahrzeugen (28) auf eine zu diesen parallele Förderbahn (34) und umgekehrt, **dadurch gekennzeichnet, dass** die Greifeinheit (38) wenigstens ein heb- und senkbares Paar doppelttief ausfahrbarer Teleskopzinken (44) hat.

2. Einrichtung nach Anspruch 1, **dadurch gekennzeichnet, dass** für jede Teleskopstufe der doppelttief ausfahrbaren Zinken (44) ein eigener, separat ansteuerbarer Ausfahrantrieb (50, 50') vorgesehen ist.

3. Einrichtung nach Anspruch 1 oder 2, **dadurch gekennzeichnet, dass** mehrere Greifeinheiten (38) nebeneinander an einer Längsseite des Fahrzeugs (28) angeordnet sind.

4. Einrichtung nach Anspruch 1 oder 2, **dadurch gekennzeichnet, dass** mehrere Greifeinheiten (38) nebeneinander an einer Längsseite der Förderbahn (34) angeordnet sind.
